# EUROPÄISCHE PATENTSCHRIFT

(11) **EP 0 283 849 B1**
(45) Veröffentlichungstag und Bekanntmachung des Hinweises auf die Patenterteilung: **01.06.1994**
(21) Anmeldenummer: 88103672.7
(22) Anmeldetag: 09.03.1988
(51) Int. Cl.: B60S 1/34

(54) **Wischvorrichtung für Scheiben von Kraftfahrzeugen**
Wiper device for windows of motor vehicles
Dispositif d'essuie-glaces de véhicules à moteur

(30) Priorität: 23.03.1987 DE 3709475
(43) Veröffentlichungstag der Anmeldung: 28.09.1988
(73) Patentinhaber: ROBERT BOSCH GMBH, 70442 Stuttgart (DE)
(72) Erfinder: Kühbauch, Gerd, Dipl.-Ing. (FH), D-7582 Bühlertal (DE)

(56) Entgegenhaltungen:
- EP-A- 0 150 753
- DE-A- 3 442 948
- PATENT ABSTRACTS OF JAPAN vol. 8, no. 267 (M-343)(1704) 07 Dezember 1984,& JP-A-59 140147 (HINO) 11 August 1984,
- PATENT ABSTRACTS OF JAPAN vol. 10, no. 25 (M-450)(2082) 31 Januar 1986,
- & JP-A-60 183249 (NITSUSAN) 18 September 1985,
- PATENT ABSTRACTS OF JAPAN vol. 9, no. 22 (M-354)(1745) 30 Januar 1985,& JP-A-59 167349 (NISSAN) 20 September 1984,

## Beschreibung

### Stand der Technik

Die Erfindung geht aus von einer Wischvorrichtung nach der Gattung des Hauptanspruchs. Es ist schon eine derartige Wischvorrichtung bekannt (DE-A-34 42 948), bei der das Bauteil der Einrichtung durch eine aus sogenanntem Memory-Metall hergestellte Anpreßfeder ist, die ihre Steifigkeit und/oder ihre Geometrie in Abhängigkeit von der auf sie einwirkenden Temperatur ändert und dadurch die Kraft ändert, mit der das Wischelement an die zu wischende Scheibe angepreßt wird. Ein der Feder zugeordneter Heizkörper soll für die passende Erwärmung der Anpreßfeder sorgen, damit sich der im Regelfall von der Fahrgeschwindigkeit abhängige, gewünschte Anpreßdruck einstellt. Dies wird durch ein Regelgerät veranlaßt, das in Abhängigkeit von dem jeweiligen Fahrzeugstand für eine entsprechende Betriebstemperatur der Anpreßfeder sorgt. Dadurch wird die Feder zwar entlang einer physikalischen Kennlinie gespannt bzw. entspannt, doch liegt der tatsächliche Anpreßdruck nur zufällig auf dem gewünschten Wert, weil dieser durch Bauteiltoleranzen in der Karosserie und der Wischvorrichtung sowie durch die Reibung im Wischerarmgelenk und der Anpreßfedereinhängung verändert wird. Es bleiben also in der Regelstrecke, in Richtung des Anpreßdruck-Kraftflusses gesehen, zwischen der Anpreßfeder und dem auf der Scheibe angelegten Wischelement, von der Regelung nicht mehr korrigierbare Parameter. Weiter erfolgt die Anpassung des Anpreßdrucks in Richtung der Anpreßdruckminderung sehr trage, weil die Abkühlung der Feder ausschließlich von der Umgebungstemperatur beeinflußt wird.

Bei einer anderen bekannten Wischvorrichtung (EP-A-0 150 753) ist das eine Ende der Anpreßfeder an einem Bimetallstreifen festgelegt, der sich in Abhängigkeit von der Größe eines auf ihn einwirkenden Stroms erwärmt wird, sich dadurch mehr oder weniger verformt und damit die Spannung der Anpreßfeder beeinflußt. Auch diese Wischvorrichtung kann nur dann befriedigend arbeiten, wenn die Außentemperatur der Eichtemperatur entspricht.

### Vorteile der Erfindung

Die erfindungsgemäße Wischvorrichtung mit den kennzeichnenden Merkmalen des Hauptanspruchs hat demgegenüber den Vorteil, daß die vom Sensor gemessene Anpreßkraft stets mit dem im Regelgerät gespeicherten, momentan zutreffenden Idealwert verglichen wird und daß über das entsprechend schaltbare Peltier-Element der Anpreßdruck jederzeit an diesen Idealwert angepaßt werden kann. Dabei wird der vorschriftsmäßige Anpreßdruck stets exakt eingehalten, weil die Regelung alle den Anpreßdruck beeinflussenden Kriterien erfaßt. Besonders vorteilhaft ist dabei die durch das Peltier-Element ermöglichte rasche Anpassung des Anpreßdrucks an sich ändernde Betriebsbedingungen.

Durch die in den Unteransprüchen aufgeführten Maßnahmen sind vorteilhafte Weiterbildungen und Verbesserungen der im Hauptanspruch angegebenen Wischvorrichtung möglich.

### Zeichnung

Ausführungsbeispiele der Erfindung sind in der Zeichnung dargestellt und in der nachfolgenden Beschreibung näher erläutert. Es zeigen Figur 1 eine Prinzipdarstellung einer Wischvorrichtung, Figur 2 eine Prinzipskizze einer ersten Ausführung einer erfindungsgemäßen Wischvorrichtung in vergrößerter Darstellung, Figur 3 eine Prinzipskizze einer zweiten Ausführung der erfindungsgemäßen Wischvorrichtung in vergrößerter Darstellung und Figur 4 eine Prinzipskizze einer weiteren Ausführungsform einer erfindungsgemäßen Wischvorrichtung in vergrößerter Darstellung.

### Beschreibung der Ausführungsbeispiele

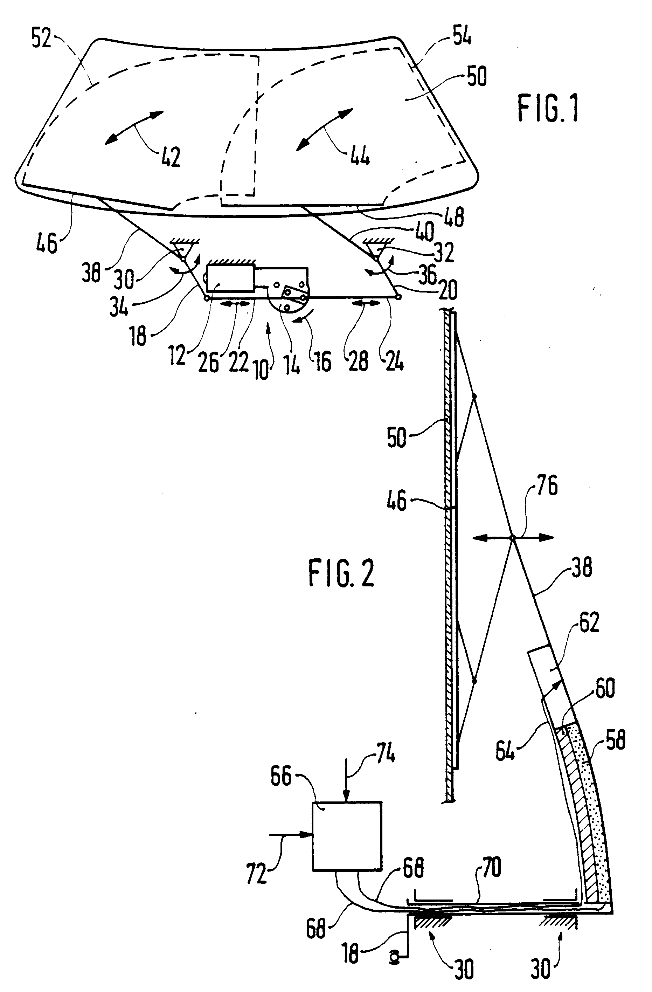

Eine in Figur 1 dargestellt Wischvorrichtung 10 weist eine Antriebseinheit 12 auf, die eine umlaufende Kurbel 14 in Richtung eines Pfeiles 16 antreibt. Dadurch werden zwei an der Kurbel angelenkte, mit ihren freien Enden an Schwingen 18 und 20 angelenkte Schubstangen 22 und 24 in hin- und hergehende Bewegung versetzt (Doppelpfeile 26, 28). Die an gestellfesten Stützlagern 30, 32 angelenkte Schwingen 18 und 20 pendeln somit in Richtung der Doppelpfeile 34 und 36 und mit den Schwingen 18 und 20 fest verbundene Wischerarme 38, 40 pendeln in Richtung der Doppelpfeile 42 und 44. An den freien Enden der Wischerarme 38 und 40 sind Wischelemente 46, 48 angeordnet, die auf einer zu wischenden Scheibe 50 angelegt sind, so daß während des Betriebs der Wischvorrichtung 10 auf der Scheibe 50 gestrichelt gezeigte Wischfelder 52, 54 überstrichen werden.

Den folgenden, detallierten Ausführungen ist der Teil der Wischvorrichtung zugrundegelegt, welcher die Schwinge 18, das Stützlager 30, den Wischerarm 38 und das Wischelement 46 aufweist.

Die Wischvorrichtung gemäß Figur 1 weist für jedes Wischelement 46 eine Einrichtung zum Ändern der Anlegekraft auf, welche die Anlegekraft zwischen einem Nullwert und einem Maximalwert ändert. Diese Änderung der Anlegekraft erfolgt in Abhängigkeit von bestimmten Kriterien, beispielsweise der Fahrgeschwindigkeit oder von Umgebungsbedingungen, wie sie sich beispielsweise bei einem in der Sonne geparkten Fahrzeug darstellen. Es soll beispielsweise erreicht werden, daß das Wischelement 46 bei geparktem Fahrzeug mit einer möglichst geringen Kraft an der Scheibe anliegt, während beispielsweise bei hoher Fahrtgeschwindigkeit oder bei stark verschmutzter Scheibe aber eine erhöhte Anlegekraft zweckmäßig ist. Es geht also um die Schaffung optimaler Verhältnisse beim Wischbetrieb und Schonung des Wischblatts, beispielsweise der empfindlichen Wischlippe in Ruhestellung sowie um die Vermeidung von Langzeitverformungen am Wischgummi, wie sie bei ruhendem, aber voll belastetem Wischelement nach einer bestimmten Zeit auftreten.

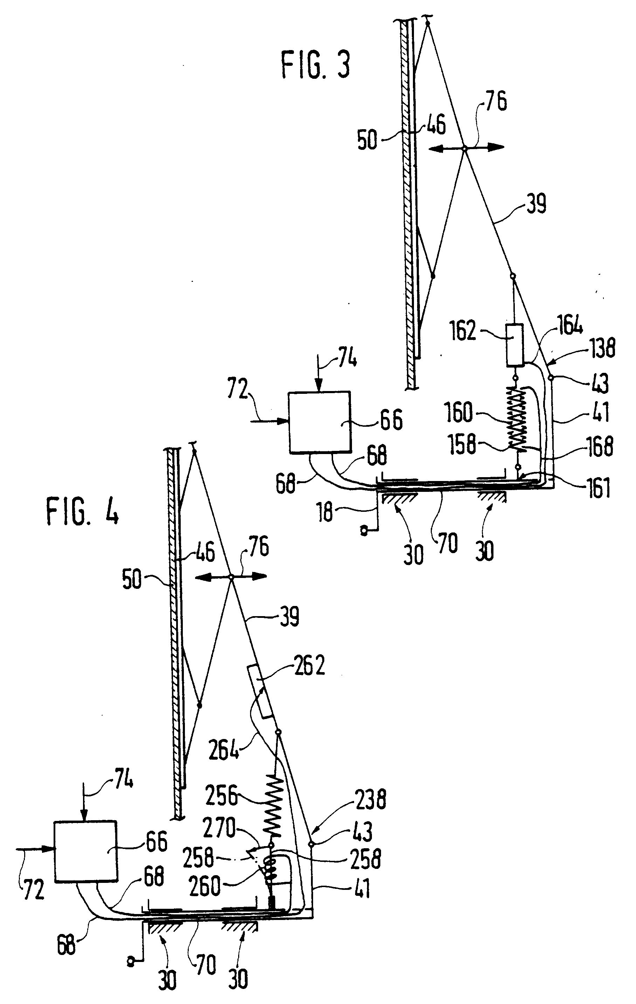

Gemäß Figur 2 weist die Einrichtung zum Ändern der Anlagekraft ein streifenförmiges Bauteil 58 auf, das in den Wischerarm 38 integriert ist und somit ein Teil des Wischerarms bildet. Dem Bauteil 58 ist ein Element 60 zugeordnet, das ebenfalls in den Wischerarm 38 integriert ist. Weiter ist an dem Wischerarm 38 ein beispielsweise als Dehnungsmeßstreifen ausgebildeter Sensor 62, der über eine Leitung 64 mit einem Regelgerät 66 verbunden ist. Die Leitung 64 ist dabei ebenso wie Versorgungsleitungen 68 zwischen dem Regelgerät 66 und dem Element 60 durch eine als Hohlwelle ausgebildete Wischerwelle 70 hindurchgeführt, die in dem Stützlager 30 gelagert und mit der Schwinge 18 fest verbunden ist. Das Regelgerät 16 ist mit Meßwertgebern 72 und 74 wirkverbunden, welche dem Regelgerät 66 Meßwerte über den Fahrzeugzustand (über den Betrieb der Wischvorrichtung, die momentane Fahrgeschwindigkeit etc.) mitteilen. Für alle möglichen Fahrzustände und Umgebungsbedingungen sind in dem Regelgerät 66 optimale Anlegekraftwerte für das Wischelement 46 gespeichert. In Abhängigkeit von den über die Meßwertgeber 72, 74 dem Regelgerät 66 zugeführten Werte wird der diesen zugeordnete optimale Wert für die Anlegekraft mit dem vom Sensor 62 ermittelten Wert für die tatsächliche, momentane Anlegekraft verglichen und danach das Element 60 aktiviert. Nach der sich ergebende Abweichung des Istwertes vom Sollwert, wird das Element 60 erwärmt oder gekühlt, so daß sich das Bauteil 58 in einer auf der Scheibe stehenden Ebene verformt. Dies hat eine Erhöhung oder eine Verminderung der Anlegekraft des Wischelements 46 auf der Scheibe 50 zur Folge, was durch den Doppelpfeil 76 angedeutet ist. Es ist sogar möglich, das Wischelement 46 vollständig von der Scheibe 50 abzuheben. Vorzugsweise ist das Element 60 ein sogenanntes Peltier-Element, während das Bauteil 58 aus Memorymetall besteht. An Stelle eines Peltier-Elements kann natürlich eine Temperaturänderung des Bauteils 58 beispielsweise auch durch eine Klimaanlage des Kraftfahrzeugs bewirkt werden. Das Wesen des Memorymetalls ist beispielsweise von Dr. Tautzenberger und Prof. Dr. Stöckel in "Wärmebehandlungs- und Werkstofftechnik", Seiten 486 bis 488 beschrieben worden. Auf diese Veröffentlichung wird hiermit ausdrücklich Bezug genommen, so daß deren Offenbarung Teil der Offenbarung der vorliegenden Anmeldung wird. Dies gilt auch für die darin aufgelisteten Literaturstellen, von denen hier besonders auf die unter den Positionen 2., 3. und 8. genannten Veröffentlichungen hingewiesen werden soll.

Bei den folgenden Ausführungsbeispielen sind sämtliche Bauteile, die mit den eben beschriebenen Bauteilen übereinstimmen, mit denselben Bezugszeichen versehen worden wie dies in Figur 2 der Fall ist.

Abweichend von dem Aufbau gemäß Figur 2 weist die Wischvorrichtung gemäß Figur 3 einen zweiteiligen Wischerarm 38 auf. Die beiden Wischerarmteile 39 und 41 sind über ein Gelenk 43 miteinander verbunden, dessen Schwenkachse sich zumindest annähernd in einer zur Scheibenoberfläche parallelen Ebene erstreckt. Das Bauteil 158 ist bei dieser Ausführungsform als Zugfeder ausgebildet, deren eines Ende bei 161 an der Wischerwelle 70 festgelegt ist. Das andere Ende des Bauteils 158 ist an dem Wischerarmteil 39 befestigt, wobei zwischen dem Bauteil 158 und der Befestigungsstelle ein Sensor 162 untergebracht ist. Der Sensor 162 registriert die Spannung, mit welcher das zugfederförmige Bauteil 158 das Wischerarmteil 39 im Gegenuhrzeigersinn belastet. Dieser Wert erlaubt Rückschlüsse auf die Anlegekraft des Wischelements 46 auf der Scheibe 50. Weiter ist dem Bauteil 158 ein ebenfalls schraubenfederartig ausgebildetes Element 160 zugeordnet, das seine Temperatur ändert wenn es entsprechend geschaltet wird. Dazu ist das Element 160 über Versorgungsleitungen 168 mit dem Regelgerät 66 verbunden. Weiter führt eine Leitung 164 vom Sensor 162 zum Regelgerät 66. Durch die Regelung der Auflagekraft wird das Wischelement 46 auf der Scheibe 50 jetzt so beeinflußt, wie dies bei der Ausführungsform gemäß Figur 2 beschrieben worden ist. Allerdings wird bei der Ausführungsform gemäß Figur 3 die wirksame Länge des Bauteils 158 verkürzt, wenn die Anlegekraft verstärkt werden soll. Umgekehrt wird die wirksame Länge des Bauteils 158 vergrößert, wenn die Anlegekraft verringert werden soll. Bei der Veränderung der wirksamen Länge wird natürlich die tatsächliche Länge des Bauteils 158 im wesentlichen beibehalten; es verändert sich jedoch die Zugspannung der Feder 158 mit welcher der Wischerarm 138 entgegen Uhrzeigersinn gegen die Scheibe 50 geschwenkt und das Wischelement 46 an der Scheibe 50 angelegt wird.

Bei der Ausführungsform gemäß Figur 4 weist der Wischerarm 238 ebenfalls ein Gelenk 43 auf, über welches die beiden Wischerarmteile 39 und 41 miteinander verbunden sind. Auch bei dieser Ausführungsform erstreckt sich die Schwenkachse des Schwenkgelenks 43 zumindest annähernd in einer zur Scheibenoberfläche parallelen Ebene. An dem Wischerarmteil 41 ist eine Zugfeder 256 mit ihrem einen Ende befestigt, während das andere Ende der Zugfeder mit dem Bauteil 258 verbunden ist. Das Bauteil 258 ist bei dieser Ausführungsform streifenförmig ausgebildet und mit seinem von der Zugfeder 256 abgewandten Ende fest mit der Wischerwelle 70 verbunden. Ein am Wischerarmteil 41 angeordneter Sensor 262 ist über eine durch die als Hohlwelle ausgebildete Wischerwelle 70 hindurchgeführte Leitung 264 mit dem Regelgerät 66 verbunden. Wie Figur 4 weiter zeigt, ist dem Bauteil 258 ein Element 260 zugeordnet, das bei entsprechender Schaltung seine Temperatur ändert. Das aus einem Memorymetall bestehende Bauteil 258 ist so programmiert, daß es bei Änderung seiner Temperatur zwischen der in Figur 4 ausgezogen dargestellten Betriebslage und einer anderen, strichpunktiert dargestellten Betriebslage hin- und herschwenkt. Bei der in Figur 4 ausgezogen dargestellten Betriebsstellung des Bauteils 258 ist die Anlegekraft des Wischelements 46 an der Scheibe 50 am geringsten. Mit dem Auslenken des Bauteils 258 entgegen dem Uhrzeigersinn in Richtung des Pfeiles 270 wird jedoch die Zugfeder 256 mehr und mehr gespannt, so daß die Anlegekraft des Wischblatts 46 an der Scheibe 50 zunimmt. Die Regelung der Anlegekraft erfolgt in der oben beschriebenen Weise über die Meßwertgeber 72, 74, den Sensor 262 und das Regelgerät 66.

Allen Ausführungsbeispielen ist gemeinsam, daß die Einrichtung zum Ändern der Anlegekraft zwischen einem Nullwert und einem Maximalwert ein Bauteil 58 bzw. 158 bzw. 258 aufweist, das sich unter Einwirkung einer Temperaturänderung zwischen seinen beiden Enden elastisch verformt und daß das eine Ende des Bauteils festgelegt ist und das andere Ende des Bauteils an dem Wischerarm angreift.

Neben den schon erwähnten Vorteilen zeichnet sich die erfindungsgemäße Wischvorrichtung besonders durch einen hohen Wirkungsgrad und durch geräuschloses Arbeiten aus. Weiter ist sie temperaturunempfindlich, kostengünstig zu fertigen und ohne Probleme nachrüstbar.

Das Bauteil 58 bzw. 158 bzw. 258 kann beispielsweise aus dem in der schon genannten Literatur erwähnten Memorymetall oder aber auch aus Bimetall gefertigt sein. Für das seine Temperatur ändernde, entsprechend schaltbare Element 60 bzw. 160 bzw. 260 wird zweckmäßig ein sogenanntes Peltier-Element verwendet, das sowohl als Heizelement als auch als Kühlelement eingesetzt werden kann. Derartige Elemente sind schon lange zumindest aus der Fachliteratur bekannt und auch schon in Patentschriften, beispielsweise in der DE-C-189 155 oder in der DE-C-280 696 beschrieben worden. Es ist aber auch denkbar, daß die Bauteile 58 bzw. 158 bzw. 258 durch eine zum Kraftfahrzeug gehörende Klimaanlage eine Temperaturänderung erfahren.

## Patentansprüche

1. Wischvorrichtung (10) für Scheiben (50) von Kraftfahrzeugen, mit einem zur Scheibe belasteten Wischerarm (38), an dessen einem Ende ein auf der Scheibe angelegtes, über diese bewegbares Wischelement (46) angeordnet ist, und der mit einer Einrichtung zum Ändern der Anlegekraft zwischen einem Nullwert und einem Maximalwert versehen ist, die zumindest ein Bauteil (58) aufweist, das sich unter Einwirkung einer Temperaturänderung zwischen seinen beiden Enden elastisch verformt, wobei die Temperaturänderung von einem Regelgerät (66), das in Abhängigkeit des jeweiligen Fahrzeugzustandes die Temperatur eines Elementes (60) beeinflußt, gesteuert wird, und wobei das eine Ende des Bauteils (58) festgelegt ist und das andere Ende des Bauteils (58) an dem Wischerarm (38) angreift, dadurch gekennzeichnet, daß an dem Wischerarm (38) ein die Anlegekraft messender Sensor (62) angeordnet ist, der den ermittelten Wert an das Regelgerät (66) meldet, daß der vom Sensor (62) ermittelte Wert für die momentane Anlegekraft mit einem im Regelgerät (66) gespeicherten, einem bestimmten Fahrzeugzustand zugeordneten vorgegebenen Wert verglichen wird, welcher über den jeweiligen Fahrzeugzustand ermittelten Meßwertgeber (72) aktiviert wird und daß das dem Bauteil (58) zugeordnete Element (60) ein entsprechend schaltbares heiz- oder kühlbares Peltier-Element ist.

2. Wischvorrichtung nach Anspruch 1, bei der der Wischerarm mit einer pendelnd angetriebenen Wischerwelle (70) verbunden ist, dadurch gekennzeichnet, daß das Bauteil (58) zumindest ein Teil des Wischerarmes (38) bildet.

3. Wischvorrichtung nach Anspruch 2, dadurch gekennzeichnet, daß das Element (60) zusammen mit dem Bauteil (58) ein Teil des Wischerarms (38) bildet.

4. Wischvorrichtung nach einem der Ansprüche 2 oder 3, dadurch gekennzeichnet, daß der Sensor (62) am Wischerarm (38) angeordnet ist.

5. Wischvorrichtung nach einem der Ansprüche 2 bis 4, dadurch gekennzeichnet, daß das Bauteil (58) streifenförmig ausgebildet ist und daß dessen Verformung in einer auf der Scheibe (50) stehenden Ebene erfolgt.

6. Wischvorrichtung nach Anspruch 1, bei der der Wischerarm mit einer pendelnd angetriebenen Wischerwelle (70) verbunden ist und zwischen dem Wischelement (46) und der Wischerwelle (70) ein Schwenkgelenk (43) aufweist, dessen Schwenkachse sich zumindest annähernd in einer zur Scheibenoberfläche parallelen Ebene erstreckt, wobei eine Zugfeder (158) das Gelenk (43) übergreifend mit einem Ende an dem mit dem Wischelement (46) verbundenen Wischerarmteil (39) angreift und mit ihrem anderen Ende an einem anderen, die Schwenkbewegung mitmachenden Bauelement der Wischvorrichtung (10) festgelegt ist, dadurch gekennzeichnet, daß das Bauteil (158) die Zugfeder bildet und daß zwischen der Zugfeder und dem mit dem Wischelement (46) verbundenen Wischerarmteil (39) ein die Spannung der Zugfeder messender Sensor (162) angeordnet ist.

7. Wischvorrichtung nach Anspruch 6, dadurch gekennzeichnet, daß das Element (160) schraubenartig gewunden ist und daß seine Enden zusammen mit den Enden der Zugfeder (158) befestigt sind.

8. Wischvorrichtung nach Anspruch 7, dadurch gekennzeichnet, daß das von dem Wischerarm (138) abgewandte Ende der Zugfeder (158) an der Wischerwelle (70) befestigt ist.

9. Wischvorrichtung nach Anspruch 1, bei dem der Wischerarm (39, 41) mit einer pendelnd angetriebenen Wischerwelle (70) verbunden ist und zwischen dem Wischelement (46) und der Wischerwelle ein Schwenkgelenk (43) aufweist, dessen Schwenkachse sich zumindest annähernd in einer zur Scheibenoberfläche parallelen Ebene erstreckt, wobei eine Zugfeder das Gelenk (43) übergreifend mit einem Ende an dem mit dem Wischelement (46) verbundenen Wischerarmteil (39) angreift und mit ihrem anderen Ende an einem anderen, die Schwenkbewegung mitmachendem Bauelement der Wischvorrichtung (10) festgelegt ist, dadurch gekennzeichnet, daß das andere Ende der Zugfeder (256) an dem Bauteil (158) festgelegt ist, welches mit einem die Schwenkbewegung mitmachenden Bauelement (70) der Wischvorrichtung (10) verbunden ist.

10. Wischvorrichtung nach Anspruch 9, dadurch gekennzeichnet, daß das Bauteil (258) nach Art eines Streifens ausgebildet ist, der sich im wesentlichen in Zugrichtung der Feder (256) erstreckt und daß dessen Verformung in einer auf der Scheibe (50) stehenden Ebene erfolgt.

11. Wischvorrichtung nach einem der Ansprüche 9 oder 10, dadurch gekennzeichnet, daß das von der Zugfeder (256) abgewandte Ende des Bauteils (258) an der Wischerwelle (70) befestigt ist.

12. Wischvorrichtung nach einem der Ansprüche 1 bis 11, dadurch gekennzeichnet, daß die zwischen dem Sensor (62 bzw. 162 bzw. 262) und dem Regelgerät (66) vorhandene Leitung (64, 68 bzw. 264 bzw. 164) durch die als Hohlwelle ausgebildete Wischerwelle (70) geführt sind.

13. Wischvorrichtung nach einem der Ansprüche 1 bis 12, dadurch gekennzeichnet, daß das Bauteil (58 bzw. 158 bzw. 258) aus Memorymetall besteht.

## Claims

1. Wiper device (10) for windows (50) of motor vehicles, having a wiper arm (38), which is loaded towards the window and at whose one end a wiper element (46), which is placed against the window and can be moved over the latter, is arranged, and which is provided with a device for changing the contact force between a zero value and a maximum value, which device comprises at least one component (58) which is elastically deformed between its two ends under the effect of a temperature change, the temperature change being controlled by a control unit (66) which affects the temperature of an element (60) in dependence on the respective status of the vehicle, and the one end of the component (58) being fixed and the other end of the component (58) acting on the wiper arm (38), characterized in that a sensor (62) is arranged on the wiper arm (38), which sensor measures the contact force and reports the value determined to the control unit (66), in that the value, determined by the sensor (62), for the momentary contact force is compared with a predetermined value which is stored in the control unit (66), is assigned to a particular status of the vehicle, and is activated via the measurement transducer (72) determined [sic] [lacuna] respective status of the vehicle, and in that the element (60) assigned to the component (58) is a heatable or coolable Peltier element which can be switched accordingly.

2. Wiper device according to Claim 1, in which the wiper arm is connected to a wiper shaft (70) which can be driven in oscillation, characterized in that the component (58) forms at least one part of the wiper arm (38).

3. Wiper device according to Claim 2, characterized in that the element (60), together with the component (58), forms a part of the wiper arm (38).

4. Wiper device according to one of Claims 2 or 3, characterized in that the sensor (62) is arranged on the wiper arm (38).

5. Wiper device according to one of Claims 2 to 4, characterized in that the component (58) is of strip-shaped design, and in that its deformation takes place in a plane perpendicular to the window (50).

6. Wiper device according to Claim 1, in which the wiper arm is connected to a wiper shaft (70), which can be driven in oscillation, and, between the wiper element (46) and the wiper shaft (70), comprises a pivot joint (43) whose pivot axis extends at least approximately in a plane parallel to the surface of the window, a tension spring (158) engaging over the joint (43) and acting with one end on the wiper-arm part (39) connected to the wiper element (46) and being fastened by its other end to another construction element of the wiper device (10) which also carries out the pivoting movement, characterized in that the component (158) forms the tension spring, and in that a sensor (162), which measures the tension of the tension spring, is arranged between the tension spring and the wiper-arm part (39) connected to the wiper element (46).

7. Wiper device according to Claim 6, characterized in that the element (160) is helically twisted, and in that its ends are fastened together with the ends of the tension spring (158).

8. Wiper device according to Claim 7, characterized in that the end of the tension spring (158) facing away from the wiper arm (138) is fastened to the wiper shaft (70).

9. Wiper device according to Claim 1, in which the wiper arm (39, 41) is connected to a wiper shaft (70), which can be driven in oscillation, and, between the wiper element (46) and the wiper shaft, comprises a pivot joint (43) whose pivot axis extends at least approximately in a plane parallel to the surface of the window, a tension spring engaging over the joint (43) and acting with one end on the wiper-arm part (39) connected to the wiper element (46) and being fastened by its other end to another construction element of the wiper device (10) which also carries out the pivoting movement, characterized in that the other end of the tension spring (256) is fixed to the component (158) which is connected to a construction element (70) of the wiper device (10) which also carries out the pivoting movement.

10. Wiper device according to Claim 9, characterized in that the component (258) is designed in the manner of a strip which extends essentially in the direction of tension of the spring (256), and in that its deformation takes place in a plane perpendicular to the window (50).

11. Wiper device according to one of Claims 9 or 10, characterized in that the end of the component (258) facing away from the tension spring (256) is fastened to the wiper shaft (70).

12. Wiper device according to one of Claims 1 to 11, characterized in that the lead [sic] (64, 68 or 264 or 164) present between the sensor (62 or 162 or 262) and the control unit (66) are guided through the wiper shaft (70) designed as a hollow shaft.

13. Wiper device according to one of Claims 1 to 12, characterized in that the component (58 or 158 or 258) consists of memory metal.

## Revendications

1. Dispositif d'essuie-glace (10) pour les glaces (50) de véhicules à moteur, avec un bras d'essuie-glace (38) chargé en direction de la glace, à une extrémité duquel est disposé un élément d'essuie-glace (46), posé sur la glace, et/ou vient se déplacer sur celle-ci, et qui est pourvu d'un système pour faire varier la force d'appui entre une valeur zéro et une valeur maximale, qui présente au moins une pièce constitutive (58), qui se déforme élastiquement entre ses deux extrémités sous l'action d'une variation de température, la variation de la température étant commandée par un appareil de réglage (66), qui influence la température d'un élément (60) en fonction de l'état correspondant du véhicule et l'une des extrémités de la pièce constitutive (58) étant fixe et l'autre extrémité de la pièce constitutive (58) venant en prise sur le bras de l'essuie-glace (38), caractérisé en ce que sur les bras de l'essuie-glace est disposé un détecteur (62) mesurant la force d'appui, détecteur qui fournit la valeur détectée sur l'appareil de réglage (66), en ce que la valeur détectée par le détecteur (62) pour la force d'appui momentanée est comparée à une valeur mise en mémoire dans l'appareil de réglage (66), prédéfinie, associée à un état déterminé du véhicule, qui est activée au moyen du capteur de mesure (72) détectant l'état correspondant du véhicule et en ce que l'élément (60) associé à la pièce constitutive (58) est un élément Peltier pouvant être branché en conséquence et pouvant être chauffé ou refroidi.

2. Dispositif d'essuie-glace selon la revendication 1, dans lequel le bras d'essuie-glace est relié à un axe d'essuie-glace (70) entraîné de façon pendulaire, caractérisé en ce que la pièce constitutive (58) constitue au moins une partie du bras de l'essuie-glace (38).

3. Dispositif d'essuie-glace selon la revendication 2, caractérisé en ce que l'élément (60) forme en même temps que la pièce constitutive (58) une partie du bras d'essuie-glace (38).

4. Dispositif selon l'une des revendications 2 ou 3, caractérisé en ce que le détecteur (62) est disposé sur le bras de l'essuie-glace (38).

5. Dispositif d'essuie-glace selon l'une des revendications 2 à 4, caractérisé en ce que la pièce constitutive (58) est constituée sous la forme d'une bande et en ce que sa déformation a lieu dans un plan perpendiculaire à la glace (50).

6. Dispositif d'essuie-glace selon la revendication 1, dans lequel le bras de l'essuie-glace est relié à un axe d'essuie-glace entraîné de façon pendulaire et présente entre l'élément d'essuie-glace (46) et l'axe d'essuie-glace (70) une articulation de pivotement (43), dont l'axe de pivotement s'étend au moins de façon approximative dans un plan parallèle à la surface de la glace, un ressort de traction (158) agissant sur l'articulation (43) en venant en prise par une extrémité sur la partie du bras de l'essuieglace (39) reliée à l'élément d'essuie-glace (46) et par son autre extrémité étant fixé à une autre pièce constitutive du dispositif d'essuie-glace (10) accompagnant le mouvement de pivotement, caractérisé en ce que la pièce constitutive (158) constitue le ressort de traction et en ce qu'on dispose entre le ressort de traction et la partie du bras de l'essuie-glace (39) reliée à l'élément d'essuie-glace (46) un détecteur (162) mesurant la tension du ressort de traction.

7. Dispositif d'essuie-glace selon la revendication 66, caractérisé en ce que l'élément (160) est spiralé comme une vis et en ce que ses extrémités sont fixées ensemble aux extrémités du ressort de traction (158).

8. Dispositif d'essuie-glace selon la revendication 7, caractérisé en ce que l'extrémité du ressort de traction (158) située à l'opposé du bras de l'essuie-glace (138) est fixée sur l'axe de l'essuieglace (70).

9. Dispositif d'essuie-glace selon la revendication 1, dans lequel le bras de l'essuie-glace (39, 41) est relié à un axe d'essuie-glace (70) entraîné de façon pendulaire et présente entre l'élément d'essuie-glace (46) et l'axe d'essuie-glace une articulation de pivotement (43), dont l'axe de pivotement s'étend de façon au moins approximative dans un plan parallèle à la surface de la glace, un ressort de traction agissant sur l'articulation (43) en venant en prise par une extrémité sur la partie de l'essuieglace (39) reliée à l'élément d'essuie-glace (46) et par son autre extrémité étant fixé à une autre pièce constitutive du dispositif d'essuie-glace (10) accompagnant le mouvement de pivotement, caractérisé en ce que l'autre extrémité du ressort de traction (256) est fixée sur la pièce constitutive (158), qui est reliée à une pièce constitutive (70) du dispositif d'essuieglace (10) accompagnant le mouvement de pivotement.

10. Dispositif d'essuie-glace selon la revendication 9, caractérisé en ce que l'élément constitutif (258) est constitué sous la forme d'une bande, qui s'étend sensiblement dans le sens d'étirement du ressort (256) et en ce que sa déformation a lieu dans un plan perpendiculaire à la glace (50).

11. Dispositif d'essuie-glace selon l'une des revendications 9 ou 10, caractérisé en ce que l'extrémité de la pièce constitutive (258) située à l'opposé du ressort de traction (256) est fixée sur l'axe de l'essuie-glace (70).

12. Dispositif d'essuie-glace selon l'une des revendications 1 à 11, caractérisé en ce que la ligne (64, 68 ou 264 ou 164) existant entre le détecteur (62 ou 162 ou 262) et l'appareil de réglage (66) est guidée à travers l'axe de l'essuie-glace (70) constituée sous la forme d'un arbre creux.

13. Dispositif d'essuie-glace selon l'une des revendications 1 à 12, caractérisé en ce que la pièce constitutive (58 ou 158 ou 258) est réalisée en un métal à mémoire.
